# EUROPÄISCHE PATENTSCHRIFT

(11) **EP 3 643 418 B1**
(45) Veröffentlichungstag und Bekanntmachung des Hinweises auf die Patenterteilung: **13.07.2022**
(21) Anmeldenummer: 19204629.0
(22) Anmeldetag: 22.10.2019
(51) Int. Cl.: B21D 5/00, B21D 5/14

(54) **BIEGEMASCHINE UND VERFAHREN ZUR STEUERUNG DER BIEGEMASCHINE**
BENDING MACHINE AND METHOD FOR CONTROLLING THE BENDING MACHINE
MACHINE À PLIER ET SON PROCÉDÉ DE COMMANDE

(30) Priorität: 23.10.2018 DE 102018126336
(43) Veröffentlichungstag der Anmeldung: 29.04.2020
(73) Patentinhaber: Häusler Holding AG, 4202 Duggingen (CH)
(72) Erfinder: Zwahlen, Alexander, 4438 Langenbruck (CH)
(74) Vertreter: Keenway Patentanwälte Neumann Heine Taruttis

(56) Entgegenhaltungen:
- EP-A2- 1 308 223
- JP-A- 2011 062 738
- US-A1- 2018 133 772

## Beschreibung

Die Erfindung betrifft eine Biegemaschine und ein Verfahren zur Steuerung einer Biegemaschine, insbesondere einer Blechbiegemaschine zum Biegen eines Blechs, wobei die Biegemaschine mindestens eine Oberwalze und eine Unterwalze sowie eine dazu positionierbare Seitenwalze aufweist.

Das Biegen von großen Blechen zu Formteilen, die anschließend in ein größeres Gewerk eingefügt werden, wird typischerweise mit Blechbiegemaschinen durchgeführt. Derartigen Maschinen wird beim Biegevorgang ein zu biegendes Blech von einer Seite zugeführt und durch die Walzen der Biegemaschine geführt, welche so positioniert sind, dass diese das Blech durch Krafteinwirkung möglichst genau in eine gewünschte Form bringen. Die Form des Bleches nach dem Biegen, also der Krümmungsradius, hängt dabei im Wesentlichen zum einen von den Einstellungen der Biegemaschine, insbesondere der Geometrie der Walzen zueinander, zum anderen von den Material- und sonstigen Eigenschaften des zu biegenden Bleches ab.

Typischerweise, aber nicht notwendigerweise, hat ein zugeführtes Blech dabei im Wesentlichen die Temperatur seiner Umgebung, sodass das Biegen des Bleches eine Kaltverformung ist. Auch wenn die nachfolgend beschriebenen Ausführungsformen der Erfindung von einem solchen kalten Blech ausgehen, so sollen das beschriebene Verfahren sowie die entsprechende Steuerung nicht darauf beschränkt sein.

Für das Biegen von Blechen sind aus dem Stand der Technik unterschiedliche Pressen, beispielsweise Abkantpressen, sowie Prägemaschinen und sogenannte Rundbiegemaschinen bekannt. Das hier beschriebene Verfahren sowie die Steuerung sind nachfolgend anhand einer sogenannten Rundbiegemaschine, insbesondere einer Rundbiegemaschine mit 4 Walzen/Rollen beschrieben, mit der typischerweise ein Blech oder eine Blechtafel von einem größeren auf einen kleineren Radius bzw. von einer kleineren auf eine größere Krümmung gebogen werden kann.

Die US 2018/133772 A1 beschreibt eine hydraulische Walzenbiegemaschine und zugehörige Biegeverfahren, wobei ein Blech zwischen einer Ober- und einer Unterrolle geführt und mit einer dritten Walze gebogen wird. Basierend auf einem vom Benutzer gewünschten Biegeradius sowie Informationen zu dem Blech aus einer Materialdatenbank steuert eine Steuerung einen Aktuator zum Einstellen der Position der dritten Walze.

Die hier beschriebenen Rundbiegemaschinen arbeiten nach dem an sich bekannten Verfahren des Walzrundens und weisen mindestens drei und in einer besonders bevorzugten Ausführungsform 4 Walzen auf. Das zu biegende Blech wird dabei zwischen zwei Walzen eingeklemmt, von denen mindestens eine motorisch angetrieben ist, sodass das eingeklemmte Blech durch Drehen der Walzen bewegt werden kann. Zum Biegen des Bleches wird mittels mindestens einer der weiteren Walzen eine Biegekraft auf das Blech ausgeübt. In Abhängigkeit von der geometrischen Anordnung der Walzen sowie den Eigenschaften des Bleches kann dieses mittels mindestens einer der angetriebenen Walzen so zwischen den Walzen der Biegemaschine bewegt werden, dass das Blech über seine Länge gebogen wird. Der kleinstmögliche Biegeradius ist dabei durch den Durchmesser der in Biegerichtung angeordneten Walze, beispielsweise der Oberwalze, begrenzt.

Moderne Biegemaschinen, insbesondere Maschinen zum Biegen großer Bleche, welche zum Biegen erheblichen Krafteinsatz erfordern und ein möglichst genaues Biegeergebnis erzielen sollen, können eine sogenannte CNC-Steuerung (computerized numerical control), also eine rechnergestützte numerische Steuerung, aufweisen. Diese kann typischerweise die Walzen und deren geometrische Anordnung steuern und/oder die für ein gewünschtes Biegeergebnis notwendigen Einstellungen der Biegemaschine ermitteln und entsprechend einstellen.

Ein typisches Problem beim Rundbiegen großer Bleche ist die Abweichung der tatsächlich erreichten von der gewünschten Verformung. Derartige Abweichungen können dadurch bewirkt werden, dass die tatsächlichen Materialeigenschaften des Bleches, also beispielsweise die Biegefestigkeit und/oder die Grenze zwischen elastischer und plastischer Verformung von derjenigen abweicht, die der Berechnung der Einstellungen der Biegemaschine zugrunde gelegt wurden.

Es ist bekannt, dass die fürs Biegen relevanten Materialeigenschaften zwischen Blechen, insbesondere aber zwischen verschiedenen Chargen von Blechen, deutlich voneinander abweichen können. Dies führt dazu, dass der nach dem Biegevorgang erhaltene Biegeradius stark vom gewünschten bzw. erwarteten Radius abweicht, wenn bei der Berechnung der Biegemaschineneinstellungen die zugrunde gelegten Material- bzw. Biegeeigenschaften des Bleches deutlich von den tatsächlichen Eigenschaften des gebogenen Bleches abweichen. Falls nach einem Biegevorgang der erhaltene Radius zu groß ist, kann dies in einem weiteren Biegevorgang mit entsprechend parametrierter Biegemaschine korrigiert werden. Ein zu geringer Biegeradius kann jedoch häufig nicht mehr mit wirtschaftlich vertretbarem Aufwand korrigiert werden. Aus diesem Grunde und weil Biegemaschinen häufig hinsichtlich der Biegekräfte nicht dazu ausgelegt sind, ist das Biegen eines Bleches auf einen gewünschten Biegeradius in nur einem Biegeschritt, also mit nur einmaliger Parametrierung der Biegemaschine, kaum möglich.

Um beim Rundbiegen der Bleche möglichst wenig Ausschuss zu produzieren, werden Bleche mit teilweise unbekannten oder stark variierenden Materialeigenschaften in kleinen Schritten, d. h. iterativ, gebogen. Das zu biegende Blech wird dabei mehrfach durch die Biegemaschine geführt, wobei die für die Verformung des Bleches relevanten Maschineneinstellungen zwischen den Durchläufen geändert werden. Ein solches Verfahren zum Biegen eines Bleches in mehreren Schritten wird auch Multipass genannt. Ausgehend von einer ursprünglichen Krümmung des zu biegenden Bleches, wobei das Blech auch plan sein kann, werden die Einstellungen der Biegemaschine beim Multipass-Biegen dabei so verändert, dass das Blech bei jedem Durchlauf ein Stück weiter in Richtung der gewünschten Verformung gebogen wird, ohne dabei jedoch das Blech zu überbiegen, d. h. auf eine zu große Krümmung zu biegen. Bei einem typischen Biegevorgang wird dabei das planare oder bereits gebogene Blech von einer geringen Krümmung in mehreren Schritten auf einen jeweils kleineren Biegeradius, also eine stärkere Krümmung gebogen, wobei der jeweils nächste Biegeschritt so gewählt wird, dass das Blech möglichst nicht auf eine zu kleine Krümmung gebogen wird, also überbogen wird, da ein Zurückbiegen auf einen größeren Radius kaum (wirtschaftlich) durchgeführt werden kann.

Gleichzeitig soll das Biegen mit einem solchen Multipass-Verfahren mit einer endlichen Anzahl von Biegedurchläufen durchgeführt werden, sodass das Biegen des Bleches von seiner ursprünglichen auf eine gewünschte Krümmung wirtschaftlich und in begrenzter Zeit möglich ist und gleichzeitig der gewünschte Biege- bzw. Krümmungsradius mit einer möglichst hohen Präzision erreicht wird. Die Einstellungen der Biegemaschine insbesondere für die aufeinander folgenden Biegevorgänge in einem Multipass-Biegeverfahren sind folglich so zu ermitteln, dass der gewünschte Biegeradius mit möglichst wenigen Biegevorgängen stattfindet und gleichzeitig eine hohe Präzision erreicht wird.

Dies wird durch ein Steuerungsverfahren beziehungsweise eine entsprechend eingerichtete Biegemaschine gemäß den unabhängigen Ansprüchen erreicht.

Im Folgenden wird die Erfindung anhand von Zeichnungen näher erläutert, wobei diese zeigen:
- Fig. 1: eine Biegemaschine in schematischer Darstellung,
- Fig. 2: ein Ablaufdiagramm zur Ermittlung der Einstellungen der Biegemaschine,
- Fig. 3: eine schematische Darstellung gespeicherter Daten zu Biegevorgängen.

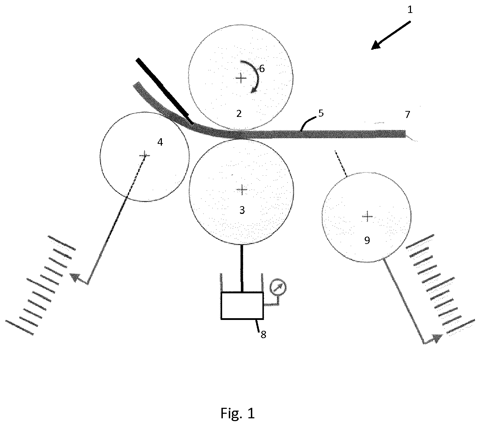

Figur 1 zeigt einen schematischen Schnitt durch die Walzen einer Biegemaschine. Die Biegemaschine 1 weist mindestens eine Oberwalze 2, eine Unterwalze 3 sowie mindestens eine erste Seitenwalze 4 auf.

Optional und besonders bevorzugt kann die Biegemaschine eine zweite Seitenwalze 9 aufweisen, deren Position unabhängig von der Position der Ober- und Unterwalze sowie der ersten Seitenwalze 4 positionierbar ist.

Die Unterwalze 3 und die Oberwalze 2 können dabei so zueinander positioniert werden, dass diese ein Blech einklemmen. Mindestens eine der beiden Walzen 2, 3 ist motorisch angetrieben, sodass diese durch Rotation ein zwischen Ober- und Unterwalze eingeklemmtes Blech 5 bewegen können. In der Figur ist durch den Pfeil 6 die Rotationsrichtung der motorisch angetriebenen Oberwalze 2 veranschaulicht. In einer alternativen Ausführungsform kann die Unterwalze 3 motorisch angetrieben sein. Ein zwischen Ober- und Unterwalze eingeklemmtes Blech 5 kann demzufolge bei entsprechender Rotation der Walzen in Zuführrichtung, siehe Pfeil 7, oder entgegen der Zuführrichtung durch Rotation der Ober- und Unterwalze bewegt werden.

Das Einklemmen des zu biegenden Bleches 5 kann durch Ausüben eines Anpressdrucks erreicht werden, mit dem das Blech zwischen Unterwalze 3 und Oberwalze 2 geklemmt wird. Dieser Anpressdruck, der hier durch den Druckzylinder 8 auf die Unterseite des Bleches aufgebracht wird, bewirkt eine erhöhte Reibung des zu biegenden Bleches zwischen Ober- und Unterwalze, sodass das Blech in herkömmlicher Weise und in Abhängigkeit von diesem Druck sowie den Reibungskoeffizienten zwischen dem Blech und der angetriebenen Walze(n) bewegt werden kann.

Für das Biegen des Bleches mittels einer Biegemaschine wird das Blech 5 zwischen den Walzen geführt, sodass über die Walzen die Kräfte für das Verformen auf das Blech aufgebracht werden können. Wie oben beschrieben kann die Bewegung dadurch bewirkt werden, dass die Ober- und/oder Unterwalze 2, 3 oder diese in Zusammenspiel mit anderen Walzen das Blech einklemmen und bei entsprechendem Antrieb der Walzen bewegen. Dabei kann in einer (nicht dargestellten) Ausführungsform die Klemmung des Bleches auch zwischen drei oder noch weiteren Walzen stattfinden, von denen mindestens eine angetrieben ist, sodass das Blech über diese bewegt werden kann. In einer weiteren, hier nicht gezeigten Ausführungsform, ist keine der Walzen motorisch angetrieben. In diesem Falle wird das Blech von einer anderen, hier nicht dargestellten Vorrichtung, zwischen den Walzen bewegt.

Die Kraft für das Biegen des Bleches wird durch mindestens drei Walzen auf das Blech 5 aufgebracht. Die mindestens drei Walzen sind dabei geometrisch und unter Berücksichtigung der Eigenschaften des Bleches so zueinander positioniert, dass das Blech nur bei einer Verformung des Bleches durch die Walzen bewegt werden kann. Typischerweise sind die Walzen 2, 3, 4 und gegebenenfalls 9 in ihrer jeweiligen Position zueinander positionierbar, beispielsweise mittels eines motorischen Antriebes verfahr- und/oder verstellbar, dass die relative Position der Walzen den Erfordernissen einer Biegung angepasst werden kann. Für einen Biegevorgang sind die mindestens drei Walzen also so zueinander zu positionieren, dass diese unter Berücksichtigung der Eigenschaften des Bleches die gewünschte Biegung des Bleches bewirken.

Figur 1 zeigt ein Blech 5, welches in Richtung des Pfeils 7 der Biegemaschine 1 zugeführt wird. In dieser Ausführungsform wird das Blech zwischen die Oberwalze 2 und die Unterwalze 3 geklemmt. Die Oberwalze 2 ist motorisch angetrieben, siehe Pfeil 6, und bewegt dementsprechend das Blech 5 auf die Seitenwalze 4 zu. Diese ist relativ zur Ober- und Unterwalze positionierbar und so platziert, dass das Blech beim Bewegen in Richtung der Seitenwalze 4 an dieser anliegt, die Seitenwalze in Verbindung mit der Ober- und Unterwalze eine Kraft auf das Blech ausübt und dieses biegt, sodass das Blech nur unter Verformung in Richtung der Seitenwalze 4 bewegt werden kann. Da hier das Blech 5 auf der Auslassseite der Biegemaschine 1 gebogen wird, also auf der Seite, auf der das Blech die Biegemaschine verlässt, nicht aber auf der Einlass- oder Zuführungsseite, ist das in Figur 1 gezeigte Biegen ein sogenanntes auslassseitiges Biegen (outbending).

Im Folgenden sind das Verfahren zur Ermittlung der Einstellungen der Biegemaschine sowie die Biegemaschine selbst anhand des oben beschriebenen auslassseitigen Biegens beschrieben. Die Biegemaschine sowie das Verfahren sollen jedoch nicht auf ein auslassseitiges Biegen beschränkt sein, sondern sind für eingangsseitiges Biegen ebenso anwendbar.

Das Biegen des Bleches hängt neben den Eigenschaften des zu biegenden Bleches wie erwähnt im Wesentlichen auch von der geometrischen Anordnung der Walzen zueinander ab, insbesondere von der Positionierung der Seitenwalze 4 relativ zur Position der Ober- und Unterwalze 2, 3. Dabei ist ersichtlich, dass der Biegeradius mit zunehmendem Abstand der Seitenwalze von der Ober- und Unterwalze größer wird.

Weiterhin ist bekannt, dass die plastische Verformung eines Bleches nicht nur von der geometrischen Anordnung der Walzen, sondern auch von dessen geometrischen Abmessungen und den Materialeigenschaften des Bleches abhängt. Folglich sind diese Faktoren bei der Ermittlung der Einstellungen der Biegemaschine zu berücksichtigen, wenn die beabsichtigte Biegung des Bleches bei einem Biegevorgang möglichst genau erreicht werden soll.

Das Verfahren zur Ermittlung der Einstellungen der Biegemaschine wird mittels einer Steuerung durchgeführt, die typischerweise einen digitalen Signalprozessor sowie einen Speicher zur Speicherung von Daten umfasst. Die Steuerung ist dabei mit der Biegemaschine so verbunden, dass die Maschine entsprechend der ermittelten Maschineneinstellungen eingestellt werden kann. Zur Ermittlung der Einstellungen der Biegemaschine führt die Steuerung ein Programm aus, welches in Software implementiert sein kann. Dieses Programm implementiert das nachfolgend beschriebene Verfahren in Form ausführbarer Instruktionen, welches basierend auf den Eigenschaften einer zu steuernden Biegewalzmaschine 1 und den Eigenschaften des zu biegenden Bleches die Einstellungen der Biegemaschine ermittelt.

Das Verfahren zur Berechnung der Einstellungen der Biegemaschine berücksichtigt unter anderem die Spannungs-Dehnungskurve, welche eine elastische Verformung gemäß dem Hook'schen Gesetz und eine plastische Verformung des Bleches nach der Lüders-Dehnung sowie die nachfolgende Gleichmaßdehnung beschreibt. Ein solches Verfahren ist aus der deutschen Patentanmeldung mit dem Aktenzeichen DE 10 2017 122 073.9 bekannt.

Typischerweise wird ein zu biegendes Blech in mehreren Biegevorgängen von seiner ursprünglich planaren Form bzw. seinem vorherigen Krümmungsradius auf eine Zielkrümmung, d. h. auf einen gewünschten Radius, gebogen. Bei einem solchen Verfahren, welches auch Multipass genannt wird, wird ein Blech dementsprechend in einem ersten Biegevorgang von einer Ausgangskrümmung bzw. seiner planaren Form auf eine andere Krümmung gebogen. Die Biegemaschine ist entsprechend eingestellt, d. h. die Walzen der Biegemaschine sind entsprechend positioniert. In einem weiteren Biegevorgang kann das Blech dann auf eine weitere Krümmung gebogen werden, wobei die Walzen der Maschine für den jeweiligen weiteren Biegevorgang entsprechend positioniert sind. Auf diese Weise kann ein Blech in einem Multipass-Biegeverfahren in mehreren Schritten von einer ursprünglichen Krümmung oder seiner planaren Form auf eine gewünschten (Ziel-) Krümmung gebogen werden, wobei die Biegemaschine für jeden Biegevorgang entsprechend eingestellt wird.

In einem typischen Multipass-Biegeverfahren kann ein Blech in iterativ aufeinander folgenden Biegevorgängen jeweils auf eine größere Krümmung gebogen werden. In einer bevorzugten Ausführungsform entspricht die Änderung der Krümmung in einem Biegevorgang der gesamten gewünschten Änderung der Krümmung dividiert durch die Anzahl der gewünschten Gesamtanzahl von Biegevorgängen. Die Änderung der Krümmung kann in einer bevorzugten Ausführungsform dementsprechend vor dem ersten Biegevorgang für den ersten und alle weiteren Biegevorgänge im Wesentlichen ermittelt werden, wobei die jeweilige Änderung für die Biegevorgänge jeweils gleich groß ist bezogen auf die Krümmung vor dem ersten Biegevorgang. Auf diese Weise kann das Blech in mehreren Schritten gleicher Größe auf seine gewünschte Krümmung gebogen werden.

Die Positionen der Walzen der Biegemaschine werden dabei in Abhängigkeit der jeweils vorliegenden und der im nächsten Biegeschritt zu erreichenden Krümmung mittels eines Verfahrens, beispielsweise des oben erwähnten Verfahrens, berechnet. Wahlweise kann dazu auch ein anderes, beliebiges Rechenverfahren verwendet werden.

Bei einem solchen Multipass-Biegen von Blechen hat sich gezeigt, dass die für einen Biegevorgang relevanten Materialeigenschaften der Bleche variieren. Dabei variieren die Materialeigenschaften insbesondere über verschiedene Chargen von Blechen, d. h. die Materialeigenschaften von Blechen einer Charge sind vergleichbar, während die Materialeigenschaften verschiedener Chargen voneinander abweichen. Eine Charge, auch Los oder Serie genannt, von Blechen bezeichnet damit eine Gruppe von Blechen, die beispielsweise in einem Produktionslauf einer Gießerei bzw. einem Walzwerk produziert wurden und die auf denselben Guss zurückgehen, sodass die chemische Zusammensetzung des Metalls (nahezu) identisch oder hinsichtlich der Biegeeigenschaften ähnlich ist. In diesem Kontext soll eine Charge von Blechen dadurch gekennzeichnet sein, dass diese identische oder zumindest ähnliche Biegeeigenschaften aufweisen.

Da die Materialeigenschaften von Blechen verschiedener Chargen variieren und damit die Biegeeigenschaften der Bleche variieren, weisen Bleche verschiedener Chargen bei gleicher Einstellung der Biegemaschine nach einem Biegevorgang unterschiedliche Krümmungen auf, sodass die identische Einstellungen einer Biegemaschine bei Blechen verschiedener Chargen zu verschiedenen Krümmungen führen. Die Einstellungen der Biegemaschine, also die Positionen der Walzen der Biegemaschine, müssen demzufolge für verschiedene Chargen von Blechen unterschiedlich sein, um letztlich dieselbe Krümmung zu erreichen.

Weiterhin wurde festgestellt, dass beim Multipass-Biegen die berechneten Parameter für die Biegemaschine selbst dann um einen Faktor korrigiert werden müssen, wenn die speziellen Eigenschaften einer Charge von Blechen bei der Berechnung der Parameter der Biegemaschine berücksichtigt wurden.

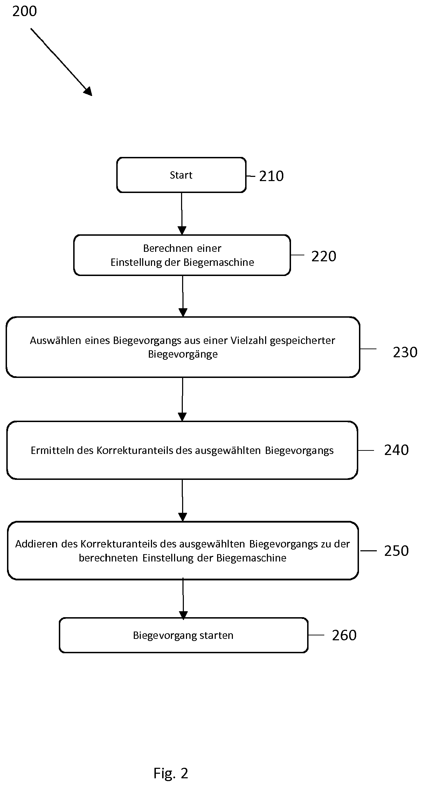

Figur 2 zeigt die Schritte eines Verfahrens 200 zur Ermittlung mindestens einer Einstellung einer Biegemaschine für einen Biegeschritt, insbesondere für einen Biegeschritt eines iterativen Multipass-Biegeverfahrens.

Nach dem Start 210 des Verfahrens wird mindestens eine Einstellung der Biegemaschine mittels eines Verfahrens in Schritt 220 und basierend auf den Eigenschaften des Bleches berechnet. Die Eigenschaften des Bleches umfassen dabei die geometrischen Eigenschaften des Bleches, also unter anderem die geometrischen Abmessungen des Bleches, sowie die Material- und Biegeeigenschaften des Blechmetalls, soweit diese bekannt sind. In einer Ausführungsform können die Maschineneinstellungen mittels des in der DE 10 2017 122 073.9 beschriebenen Verfahrens berechnet werden. Die mindestens eine Einstellung der Biegemaschine kann in einer bevorzugten Ausführungsform die Position einer Seitenwalze der Biegemaschine sein. Insbesondere kann bei einem auslassseitigen (outbending) Biegen die mindestens eine Biegemaschineneinstellung die Position der auslassseitigen Walze der Biegemaschine sein oder umfassen. Im Nachfolgenden sei die gesuchte Maschineneinstellung die Position der auslassseitig angeordneten Seitenwalze bei einem auslassseitigen Biegevorgang, sodass das Ermitteln einer Maschineneinstellung exemplarisch für die Position der auslassseitigen Seitenwalze beschrieben wird.

Im nächsten Schritt 230 wird basierend auf der aktuellen Krümmung des Bleches und der zu erreichenden Krümmung aus einer Vielzahl von gespeicherten Datensätzen über vorherige Biegevorgänge ein Datensatz ausgewählt. Ein jeder der gespeicherten Datensätze umfasst dabei in einer bevorzugten Ausführungsform und zu einem zuvor durchgeführten Biegevorgang die für den Biegevorgang relevanten Parameter des Bleches sowie die verwendeten Einstellungen der Biegemaschine. Die gespeicherten Parameter des Bleches umfassen in einer Ausführungsform die Krümmung des Bleches vor und nach dem Biegeschritt und die verwendeten Einstellungen der Biegemaschine umfassen den Unterwalzendruck sowie die Position der Seitenwalze. Dabei umfasst mindestens eine gespeicherte Einstellung der Biegemaschine einen Korrekturanteil, sodass der gespeicherte Wert einen berechneten Anteil und einen Korrekturanteil aufweist. Die gespeicherten Datensätze über vorherige Biegevorgänge werden daher im Folgenden als korrigierte Datensätze bezeichnet. Die gespeicherten Datensätze über die vorherigen Biegevorgänge können dabei im Speicher der Biegemaschinensteuerung gespeichert sein.

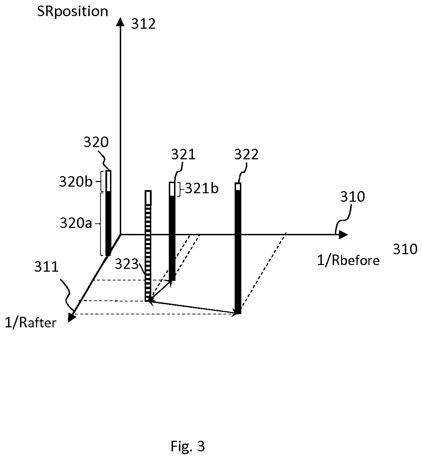

In einer bevorzugen Ausführungsform wird dabei der nächstliegende gespeicherte Datensatz eines Biegevorgangs ausgewählt, wobei für die Auswahl die Differenz zwischen den Krümmungen der gesuchten und der entsprechend gespeicherten Biegemaschineneinstellung des gespeicherten Datensatzes betrachtet wird. Diese Auswahl wird im Folgenden anhand der Figur 3 näher erläutert.

Figur 3 zeigt eine schematische Darstellung einer Vielzahl gespeicherter Datensätze vorheriger Biegevorgänge. In einer bevorzugten Ausführungsform umfassen die Datensätze Einstellungen einer Biegemaschine sowie Angaben zu dem Blech vor und nach dem Biegevorgang. Die gespeicherten Einstellungen umfassen dabei insbesondere Positionen von Seitenwalzen, insbesondere für einen Biegevorgang in einem Multipass-Biegeverfahren, insbesondere bei einem auslassseitigen Biegen (outbending), sowie Angaben zu dem gebogenen Blech. Die Angaben zu dem gebogenen Blech umfassen dabei mindestens die Krümmung des Bleches vor und nach dem Biegevorgang sowie die weiteren für den Biegevorgang relevanten Eigenschaften des Bleches, wie beispielsweise die geometrischen Abmessungen des Bleches, welche für eine Charge von Blechen identisch sein können.

Figur 3 veranschaulicht eine Vielzahl von Daten vorheriger Biegevorgänge, wobei exemplarisch Positionen von Seitenwalzen grafisch dargestellt sind. In dem dargestellten Koordinatensystem sind die eingetragenen Werte nicht maßstabsgetreu.

Auf der nach rechts zeigenden Achse 310 des Koordinatensystems ist die Krümmung 1/Rbefore des Bleches vor dem Biegevorgang abgetragen, wobei die Krümmung hier der Kehrwert des Biegeradius Rbefore vor dem Biegevorgang ist. Auf der Achse 311 ist die gemessene Krümmung 1/Rafter des Bleches nach dem Biegevorgang abgetragen, wobei Rafter den Radius des Bleches nach dem Biegevorgang bezeichnet. Auf der nach oben zeigenden Achse 312 SRposition ist die Position der Seitenwalze eingetragen, welche bei einem vorherigen Biegevorgang verwendet wurde.

In dem gezeigten Ausführungsbeispiel seien bereits Daten von drei Biegevorgängen mit ihrer jeweiligen Seitenwalzenposition320-322 bekannt und lesbar gespeichert.

Eine jede gespeicherte Seitenwalzenposition 320-322 wird aufgeteilt in einen berechneten Anteil und einen hinzugefügten Korrekturwert. Für die Seitenwalzenposition 320 ist der berechnete Anteil der Seitenwalzenposition in Fig. 3 mit 320a und der Korrekturwert ist mit 320b bezeichnet, sodass sich der gespeicherte Seitenwalzenpositionswert aus dem berechneten Anteil 320a und einem Korrekturwert 320b zusammensetzt. Dazu ist anzumerken, dass die Korrekturwerte positive oder negative Werte annehmen können, wobei in Fig. 3 zur Veranschaulichung nur positive Werte dargestellt sind.

Der berechnete Anteil wird anhand der Krümmung vor und nach dem Biegevorgang sowie anhand weiterer den Biegevorgang definierenden Größen, wie z. B. auslaufseitiges Biegen und der Unterwalzendruck, berechnet. Der hinzugefügte Korrekturwert wurde empirisch ermittelt. Der Korrekturwert wird ermittelt, indem die berechnete Seitenwalzenposition von der beim Biegevorgang eingestellten Seitenwalzenposition subtrahiert wird.

In einem ersten Schritt zur Korrektur eines errechneten Wertes einer Seitenwalzenposition, also einer Biegemaschineneinstellung, für einen gewünschten neuen Biegevorgang wird derjenige gespeicherte Datensatz eines Biegevorgangs ermittelt, der dem gewünschten Biegevorgang in der von den Achsen 1/Rbefore und 1/Rafter aufgespannten Ebene am nächsten liegt. Dies kann durch Ermittlung des geometrischen Abstands der Werte in der von den beiden Achsen aufgespannten Ebene durchgeführt werden.

In einer bevorzugten Ausführungsform wird die nächstliegende Seitenwalzenposition mit größerem Biegeradius, also entsprechend kleinerer Krümmung ermittelt. Auf diese Weise steigt die Wahrscheinlichkeit, dass bei dem anstehenden Biegevorgang das Blech nicht überbogen, d. h. auf eine zu starke (große) Krümmung gebogen wird, welche nicht mehr oder nur mit hohem Aufwand korrigiert werden könnte. In dem Fall, dass die nach dem Biegevorgang erreichte Krümmung nicht stark (groß) genug ist, kann hingegen in einem weiteren Biegevorgang die Krümmung erhöht werden.

In dem hier schematisch dargestellten Ausführungsbeispiel soll für eine gegebene Ausgangskrümmung und eine gewünschte Zielkrümmung 323 die Biegemaschineneinstellung ermittelt werden. Dazu wird zunächst die Einstellung der Biegemaschine, hier die Position der Seitenwalze, berechnet, siehe 220 in Fig. 2. Anschließend wird basierend auf der Krümmung vor und nach dem Biegen (1/Rbefore und 1/Rafter) aus den gespeicherten Datensätzen vorheriger Biegenvorgänge derjenige des nächstliegenden Biegevorgangs gewählt, Schritt 230 in Fig. 2. Anschließend wird für den gewünschten Biegevorgang 323 der Korrekturanteil 321b des gewählten Datensatzes ermittelt, Schritt 240, und auf den errechneten Wert der Biegemaschineneinstellung addiert, d. h. der Korrekturanteil 321b des gewählten (Datensatzes eines) Biegevorgangs 321 wird als Korrekturwert für die Korrektur der berechneten Biegemaschineneinstellung 323 verwendet, Schritt 250, wie auch unten beschrieben. Auf diese Weise wird die berechnete Biegemaschineneinstellung 323 um den Korrekturanteil eines gespeicherten Biegevorgangs korrigiert, sodass dann eine korrigierte berechnete Maschineneinstellung vorliegt.

Die gespeicherten Datensätze von Biegevorgängen, welche vor dem Auswählen des nächstliegenden Wertes vorhanden sein müssen, können mittels eines beliebigen Verfahrens ermittelt werden, wobei diese für eine spezielle Charge von Blechen, die also individuelle Biegeeigenschaften aufweist, ermittelt werden.

In einer bevorzugten Ausführungsform werden die gespeicherten Datensätze von Biegevorgängen passend für eine Charge von Blechen individuell ermittelt, beispielsweise indem bei einem Multipass-Ablauf mit 3 Biegevorgängen, wobei die ersten zwei Biegevorgänge zum Sammeln der Daten über Biegevorgänge verwendet werden und der dritte Biegevorgang vom nächstliegenden (in diesem Fall dem zweiten) Biegevorgang die Korrektur übernommen werden kann. Die Biegemethode, hier auslassseitiges Biegen (outbending) sowie der Unterwalzenanpressdruck, können bei der Ermittlung der gespeicherten korrigierten Werte vorzugsweise konstant gehalten werden.

In einem bevorzugten Ausführungsbeispiel können die gespeicherten Daten zu Biegevorgängen in Form der nachstehend schematisch wiedergegebenen Tabelle und in einem beliebigen digitalen Format gespeichert werden.

| | Rbefore | Rafter | Gemessene Seitenwalzenposition | Biegemethode | Druck Unterwalze | Korrekturwert |
|---|---|---|---|---|---|---|
| 1 | 479,232 | 330 | 174,375 | outbending | 200 | 1,2508 |
| 2 | ... | ... | ... | outbending | 200 | ... |

Wieder mit Bezug zu Figur 2 wird nach dem Auswählen eines Datensatzes eines Biegevorgangs, hier des nächstliegenden Biegevorgangs 323, aus der Vielzahl der gespeicherten Datensätze zu Biegevorgängen die in Schritt 220 berechnete Biegemaschineneinstellung um den Korrekturwert des gewählten Datensatzes korrigiert, Schritt 240. Dementsprechend wird der errechnete Wert 323, hier die errechnete Seitenwalzenposition 323, um den Korrekturanteil 321b des Wertes 321 des gewählten nächstliegenden gespeicherten Datensatzes korrigiert, d. h. der Korrekturanteil des gewählten nächstliegenden Datensatzes wird zu dem errechneten Biegemaschinenwert hinzuaddiert, sodass ein korrigierter errechneter Wert erhalten wird, Schritt 250.

Im nächsten Schritt wird die Biegemaschine entsprechend dem korrigierten errechneten Wert der Biegemaschineneinstellung für den nächsten Biegevorgang eingestellt. Mit der so ermittelten Einstellung kann anschließend die Biegung, insbesondere ein nächster Biegevorgang eines Multipass-Biegens, durchgeführt werden, Schritt 260.

Nachdem einer von mehreren Biegevorgängen eines Multipass-Verfahrens durchgeführt wurde, kann nach dem oben beschriebenen Verfahren für eine nächste gewünschte Krümmung eines Bleches die Biegemaschineneinstellung mit dem oben beschriebenen Verfahren ermittelt werden.

Dabei hat sich gezeigt, dass mit dem oben beschriebenen Verfahren sehr gute Ergebnisse auch bei nur wenigen gespeicherten korrigierten Biegemaschineneinstellungen erreicht werden können und die Biegemaschineneinstellungen sehr schnell und mit nur wenigen Versuchsbiegungen auf die Eigenschaften einer Charge von Blechen eingestellt werden können.

## Patentansprüche

1. Verfahren (200) zur Steuerung einer Biegemaschine (1), wobei
die Biegemaschine (1) zum Biegen eines Blechs (5) mindestens eine Oberwalze (2) und eine Unterwalze (3) und eine dazu positionierbare Seitenwalze (4) aufweist, umfassend
Berechnen (220) mindestens einer Biegemaschineneinstellung mittels eines Rechenverfahrens basierend mindestens auf den Eigenschaften des Blechs (5),
**gekennzeichnet durch**
Auswählen (230) eines Datensatzes aus einer Vielzahl gespeicherter Datensätze von vorherigen Biegevorgängen, wobei ein gespeicherter Datensatz eines vorherigen Biegevorgangs eine errechnete Biegemaschineneinstellung (320a) und einen zugehörigen Korrekturwert (320b) umfasst, und
Korrigieren (250) der berechneten Biegemaschineneinstellung basierend auf dem Korrekturwert (320b) einer entsprechenden Biegemaschineneinstellung des ausgewählten gespeicherten Datensatzes, und
Einstellen der Biegemaschine (1) basierend auf der korrigierten berechneten Biegemaschineneinstellng.

2. Verfahren (200) nach Anspruch 1, wobei die Biegemaschineneinstellung eine Walzenposition ist.

3. Verfahren (200) nach einem der vorstehenden Ansprüche, wobei der ausgewählte Datensatz eines Biegevorgangs derjenige ist, der anhand der Krümmung vor und nach dem Biegen der nächstliegende ist.

4. Verfahren (200) nach Anspruch 3, wobei der ausgewählte Datensatz der nächstliegende geringerer Krümmung ist.

5. Verfahren (200) nach einem der vorhergehenden Ansprüche, wobei die gespeicherten Datensätze bei Biegevorgängen während eines Multipass Biegeverfahrens ermittelt und gespeichert werden.

6. Verfahren (200) nach einem der vorherigen Ansprüche, wobei die gespeicherten Datensätze für eine Charge von Blechen jeweils ermittelt werden.

7. Verfahren (200) nach Anspruch einem der vorstehenden Ansprüche, wobei das Rechenverfahren zur Ermittlung der berechneten Biegemaschineneinstellung ein iteratives Finite-Elemente-Verfahren umfasst.

8. Verfahren (200) nach einem der vorherigen Ansprüche, wobei die Vielzahl der gespeicherten Datensätze vorheriger Biegevorgänge in einem digitalen Datenspeicher gespeichert sind.

9. Biegemaschine (1) mit mindestens drei zueinander positionierbaren Walzen und mit Mitteln, die zur Durchführung des Verfahrens (200) nach Anspruch 1 geeignet sind.

10. Computerprogramm, umfassend Befehle, die bewirken, dass die Biegemaschine (1) nach Anspruch 9 die Verfahrensschritte (200) nach Anspruch 1 ausführt.

## Claims

1. Method (200) for controlling a bending machine (1),
the bending machine (1) having, for bending a metal sheet (5), at least an upper roller (2) and a lower roller (3) and a side roller (4) that can be positioned with respect thereto, the method comprising
calculating (220) at least one bending machine setting using a calculation method based at least on the properties of the metal sheet (5),
**characterized by**
selecting (230) a data set from a plurality of stored data sets from previous bending operations, a stored data set from a previous bending operation comprising a calculated bending machine setting (320a) and an associated correction value (320b), and
correcting (250) the calculated bending machine setting based on the correction value (320b) of a corresponding bending machine setting of the selected stored data set, and setting the bending machine (1) based on the corrected calculated bending machine setting.

2. Method (200) according claim 1, wherein the bending machine setting is a roller position.

3. Method (200) according to either of the preceding claims, wherein the selected data set of a bending operation is that which is closest based on the curvature before and after the bending.

4. Method (200) according to claim 3, wherein the selected data set is the closest lower curvature.

5. Method (200) according to any of the preceding claims, wherein the stored data sets are determined and stored in bending operations during a multi-pass bending process.

6. Method (200) according to any of the preceding claims, wherein the stored data sets are determined for each of a batch of metal sheets.

7. Method (200) according to any of the preceding claims, wherein the calculation method for determining the calculated bending machine setting comprises an iterative finite element method.

8. Method (200) according to any of the preceding claims, wherein the plurality of stored data sets of previous bending operations are stored in a digital data memory.

9. Bending machine (1) having at least three rollers that can be positioned relative to one another and having means that are suitable for carrying out the method (200) according to claim 1.

10. Computer program, comprising instructions which cause the bending machine (1) according to claim 9 to carry out the method steps (200) according to claim 1.

## Revendications

1. Procédé (200) permettant la commande d'une machine à cintrer (1), dans lequel
la machine à cintrer (1) présente au moins un rouleau supérieur (2) et un rouleau inférieur (3) et un rouleau latéral (4) pouvant être positionné entre ceux-ci pour le cintrage d'une tôle (5), comprenant
le calcul (220) d'au moins un réglage de machine à cintrer à l'aide d'un procédé de calcul basé au moins sur les propriétés de la tôle (5),
**caractérisé par**
la sélection (230) d'un ensemble de données parmi une pluralité d'ensembles de données stockés de processus de cintrage précédents, un ensemble de données stocké d'un processus de cintrage précédent comprenant un réglage de machine à cintrer calculé (320a) et une valeur de correction (320b) associée, et
la correction (250) du réglage de machine à cintrer calculé sur la base de la valeur de correction (320b) d'un réglage de machine à cintrer correspondant de l'ensemble de données stocké sélectionné, et
le réglage de la machine à cintrer (1) sur la base du réglage de machine à cintrer calculé corrigé.

2. Procédé (200) selon la revendication 1, dans lequel le réglage de machine à cintrer est une position de rouleau.

3. Procédé (200) selon l'une des revendications précédentes, dans lequel l'ensemble de données sélectionné d'un processus de cintrage est celui qui est le plus proche selon la courbure avant et après le cintrage.

4. Procédé (200) selon la revendication 3, dans lequel l'ensemble de données sélectionné est le plus proche de la courbure inférieure.

5. Procédé (200) selon l'une des revendications précédentes, dans lequel les ensembles de données stockés sont déterminés et stockés lors de processus de cintrage pendant un procédé de cintrage multipasse.

6. Procédé (200) selon l'une des revendications précédentes, dans lequel les ensembles de données stockés sont respectivement déterminés pour un lot de tôles.

7. Procédé (200) selon l'une des revendications précédentes, dans lequel le procédé de calcul permettant de déterminer le réglage de machine à cintrer calculé comprend un procédé par éléments finis itératif.

8. Procédé (200) selon l'une des revendications précédentes, dans lequel la pluralité d'ensembles de données stockés de processus de cintrage précédents sont stockés dans une mémoire de données numérique.

9. Machine à cintrer (1) comportant au moins trois rouleaux pouvant être positionnés les uns par rapport aux autres et comportant des moyens adaptés pour la mise en oeuvre du procédé (200) selon la revendication 1.

10. Programme informatique comprenant des instructions qui amènent la machine à cintrer (1) selon la revendication 9 à exécuter les étapes de procédé (200) selon la revendication 1.
